# EUROPEAN PATENT SPECIFICATION

(11) **EP 1 269 752 B1**
(45) Date of publication and mention of the grant of the patent: **11.05.2005**
(21) Application number: 01920893.3
(22) Date of filing: 30.03.2001
(51) Int. Cl.: H04N 7/173

(54) **INTERACTIVE MEDIA SYSTEM AND METHOD FOR PRESENTING PAUSE-TIME CONTENT**
INTERAKTIVES MEDIASYSTEM UND METHODE ZUR PRESENTATION VON BERICHTEN WÄHREND PAUSEN
SYSTEMES MEDIAS INTERACTIFS ET PROCEDES PERMETTANT DE REPRESENTER UN CONTENU DE TEMPS DE PAUSE

(30) Priority: 31.03.2000 US 193894 P
(43) Date of publication of application: 02.01.2003
(60) Divisional application: 04009508.5
(73) Proprietor: United Video Properties, Inc., Tulsa, OK 74136 (US)
(72) Inventor: THOMAS, William, L., Bixby, OK 74008 (US); BEREZOWSKI, David, M., Tulsa, OK 74133 (US); ELLIS, Michael, D., Boulder, CO 80304 (US); MOORE, S., Sean, Tulsa, OK 74104 (US); DEWEESE, Toby, Tulsa, OK 74137 (US)
(74) Representative: Hibbert, Juliet Jane Grace
(86) International application number: PCT/US2001/010235
(87) International publication number: WO 2001/076249

(56) References cited:
- WO-A-97/03521
- US-A- 5 610 653
- US-A- 5 721 829
- US-A- 5 781 228
- US-A- 5 826 168
- US-A- 5 973 684

## Description

This application claims the benefit of United States Provisional Application No. 60/193,894, filed March 31, 2000.

### Background of the Invention

This invention relates to an interactive media application and, more particularly, to an interactive media application that provides for pausing media.

Audio and video media, such as broadcast television programs, cable television programs, pay-per-view programs, video-on-demand (VOD) programs, near video-on-demand (NVOD) programs, music, promotional material, and other types of media are typically distributed to viewers over wired or wireless networks. Near video-on-demand and video-on-demand systems allow users to view media nearly on-demand or on-demand. Wired and wireless networks may include one-way cable or two-way cable television systems, broadcast television systems, satellite service networks such as digital broadcast satellite (DBS) systems, the Internet, or any other suitable means for delivering audio and video media.

Viewers and listeners of such media typically record the media on video cassettes, audio cassettes, compact disks, digital storage media, or the like. Recently, products have been developed that provide users with increased flexibility in managing what they watch and record. Personal video recorders such as the Philips™ HDR612 Tivo™ Personal TV Recorder and ReplayTV™ 3060 digital video recorder can record programs on a hard disk drive. Personal video recorder systems may provide users with video cassette functionality such as recording programs, scheduling recording of programs, allowing a user to watch one program while simultaneously recording another program, etc. In addition, personal video recorder systems may provide features that are not available with video cassette recorders such as the ability to pause real-time media (e.g., to answer the telephone or to answer the door) and then resume watching the media at the point where the media was initially paused. This provides the user with immediate control over watching real-time media. For example, there may be no need for the user to locate a blank video cassette to start recording the media that the user may miss.

Current personal video recorder systems such as Tivo™ based systems and ReplayTV™ systems display the last frame currently viewed by the viewer when the media is paused. For anyone viewing the media, the duration of time that the media is paused may be considered useless or uninformative.

Documents US 5 826 168 and US 5 610 653 show the display of graphics or informational data during a pause.

### Summary of the Invention

The objects of the invention are accomplished in accordance with the principles of the present invention by providing an interactive media application that may display pause-time content when a user pauses media that is being played. The invention is defined in claims 1 and 18.

The interactive media application may enable a user to pause media that is being played. The media may be real-time programing, near video-on-demand programming, video-on-demand programming, recorded programs, or any other suitable type of media. When the media is paused, the interactive media application may substitute pause-time content in place of the paused media. Pause-time content may include media such as graphics, text, animations, music, promotions, advertisements, summaries, trivia, or any other suitable media. The interactive media application may substitute customized pause-time content that is related to the media paused by the user, such as a summary of the events viewed up until the point at which the media was paused. The media may have associated media data such as metadata, identifiers, universal resource locators, interactive media application control information, or any other suitable information that is associated with the media. The interactive media application may substitute specific pause-time content based upon the media data to provide, for example, pause-time content related to the paused media.

The interactive media application may also prevent users from accessing features of the system at certain times. For example, the interactive media application may prevent the user from fast-forwarding through certain time slots within a commercial break. The interactive media application may restrict the user's actions based upon the content of the media data associated with the media currently being played.

### Brief Description of the Drawings

The above and other objects and advantages of the invention will be apparent upon consideration of the following detailed description, taken in conjunction with the accompanying drawings, in which like reference characters refer to like parts throughout, and in which:
FIG. 1 is a schematic diagram of an illustrative interactive media system in accordance with the present invention;
FIG. 2 shows an illustrative interactive media display screen in which pause-time content is being substituted for paused media in accordance with one embodiment of the present invention;
FIG. 3 shows an illustrative interactive media display screen in which the user has resumed playing media in accordance with one embodiment of the present invention;
FIG. 4 is a flowchart of illustrative steps involved with substituting pause-time content for real-time media in accordance with one embodiment of the present invention;
FIG. 5 is a flowchart of illustrative steps involved with substituting pause-time content for near video-on-demand media in accordance with one embodiment of the present invention;
FIG. 6 is a flowchart of illustrative steps involved with substituting pause-time content for recorded media or video-on-demand media in accordance with one embodiment of the present invention;
FIG. 7 is a flowchart of illustrative steps involved with preventing the user to access features in accordance with one embodiment of the present invention; and
FIG. 8 shows an illustrative screen that indicates that fast-forwarding is prohibited in accordance with one embodiment of the present invention.
FIG. 9 is a flowchart of illustrative steps involved with the media data instructing the interactive media application to store certain portions of the media in accordance with one embodiment of the present invention.

### Detailed Description of Preferred Embodiments

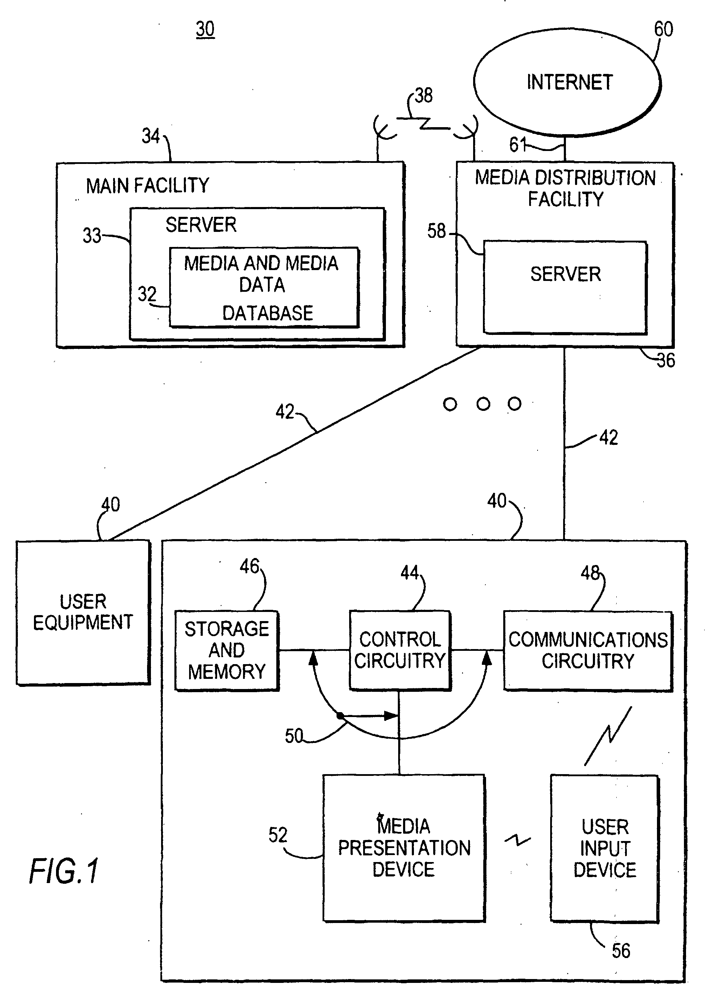

An illustrative interactive media system 30 in accordance with the present invention is shown in FIG. 1. Illustrative interactive media system 30 may include main facility 34, media distribution facility 36, and user equipment 40. Illustrative interactive media system 30 may include multiple main facilities, but only one main facility 34 is illustrated in FIG. 1 to avoid over complicating the drawing. For clarity the invention will be primarily discussed in connection with the use of one such main facility. Main facility 34 may include server 33 for storing and distributing media and media data from media and media data database 32, which may be used for storing media and media data. Main facility 34 may also store and distribute pause-time content, which may be media, media data, or both. Media may include audio and video media such as broadcast television programs, cable television programs, pay-per-view programs, video-on-demand (VOD) programs, near video-on-demand (NVOD) programs, music, promotional material, or any other suitable type of media. Media data may include data associated with the media such as metadata, identifiers, universal resource locators, interactive media application control information, program guide information (e.g., program guide listings data, pay-per-view ordering information, program promotional information, or any other suitable program guide information) or any other suitable data. Main facility 34 may distribute the media and media data to multiple media distribution facilities 36 via communications paths such as communications path 38. Communications path 38 may be any suitable communications path, such as a satellite link, a cable link, a fiber-optic link, a microwave link, a telephone network link, an Internet link, or a combination of such links. If it is desired to transmit video signals (e.g., television programs) over communications path 38 in addition to data signals, a relatively high bandwidth link such as a satellite link may be preferable to a relatively low bandwidth link such as a telephone line. Only one distribution facility 36 is illustrated in FIG. 1 to avoid over complicating the drawing. For clarity, the invention will be primarily discussed in connection with the use of one such distribution facility.

Media distribution facility 36 may be a broadcast television facility, a cable system headend, a satellite distribution facility, a broadcast music facility, or any other suitable media distribution facility for transmitting media, pause-time content, and any suitable information to user equipment 40. Media distribution facility 36 may include server 58. Server 58 may be capable of handling media such as text, images, graphics, audio, video, any other suitable media, or a combination of such media. Server 58 may include a database for storing media, media data, pause-time content or any other suitable content. In addition, server 58 may be capable of providing interactive services such as near video-on-demand (NVOD) and video-on-demand (VOD). Server 58 may be based on one or more computers.

Media data, which is associated with media, may include information such as metadata, identifiers, universal resource locators (URL's), interactive media application control information, or any other suitable information that may be associated with the media. For example, if the media is television, its associated media data may include information on the type of program that is being presented to the user such as comedy, movie, sports, etc., the URL to the program's Web site, or any other suitable information. Media distribution facility 36 may receive the media data from main facility 34 via communications path 38. If desired, some or all of the media data may be provided using data sources at facilities other than main facility 34. For example, media distribution facility 34 may receive the media data from Internet 60 via communications path 61, which may be a T1 link, a digital subscriber line (DSL) link, cable modem link, analog modem link, or any other suitable link.

Media data may be distributed along with its associated media using an in-band or out-of-band technique and may use digital or analog techniques. Media data may be distributed continuously, periodically, or on-demand to user equipment 40.

Media distribution facility 36 may distribute various audio and video media such as television programs, cable television programs, satellite programs, pay-per-view programs, VOD programs, NVOD programs, music programs, promotional material, or any other suitable type of media to user equipment 40 over communications paths 42. Media distribution facility may also distribute pause-time content, which may be any combination of text, graphics, audio, video, animations, trivia, promotions, advertisements, music, or any other suitable media content to user equipment 40.

Each media distribution facility 36 may have a number of associated users, each of which may have user equipment 40 coupled to media distribution facility 36 via one of communications paths 42. User equipment 40 may be equipment such as user television equipment, user computer equipment (e.g., a desktop computer, a laptop computer, a notebook computer, a handheld computing device such as a personal digital assistant or other small portable computer, etc.), user music equipment (e.g., a stereo) or any other suitable user media equipment for implementing the interactive media application. The interactive media application may be implemented locally on user equipment 40 or may be implemented using a client-server or distributed architecture where some of the application is implemented locally on user equipment 40 in the form of a client process and some of the application is implemented at a remote location (e.g., media distribution facility 36) as a server process.

User equipment 40 may include components such as control circuitry 44, memory and storage 46, communication circuitry 48, media presentation device 52, and user input device 56 for implementing the interactive media application. The components may be configured to support functions of the interactive media application such as receiving media, media data, and pause-time content, recording media in storage, simultaneously recording and playing media, playing recorded media from storage, and sending and receiving application data and information. Control circuitry 44 may communicate with and control storage and memory 46, communications circuitry 48, and media presentation device 52 using communications paths 50. Paths 50 may be hard wired, wireless (e.g., Bluetooth), optical paths or the like.

Storage and memory 46 may include a magnetic media recorder (e.g., hard disk drive or the like), memory (e.g. flash memory, EEPROM, or the like), a videocassette recorder, a digital recording device, any other suitable memory and storage device, or any suitable combination thereof. Some or all of memory and storage 46 may be located external to the device that contains control circuitry 44.

Control circuitry 44 may provide media presentation device 52 with media and pause-time content stored in storage and memory 46. Control circuitry 44 may also provide media presentation device 52 with media and pause-time content that is received from communications circuitry 48. Media presentation device 52 may be a television, a computer system with monitor and speakers, a stereo system, or any other suitable presentation device.

The user may interact with control circuitry 44 using input device 56. User input device 56 may be a remote control, a keyboard, a wireless keyboard, a display remote, a handheld computer, a mouse, a trackball, a touch pad, or any other suitable interactive interface. User input device 56 may transmit signals to communications circuitry 48 or media presentation device 52 via any suitable communications path, such as a hard wired or wireless path.

Communications paths 42 may be any suitable type of link that allows media distribution facility 36 to distribute media, pause-time content, media data, program schedule information, and any other suitable information to user equipment 40. For example, if media distribution facility 36 is a cable headend, communications paths 42 may be cable. If media distribution facility 36 is a music broadcast facility, communications paths 42 may be a wireless link. There may also be more than one communications path 42 coupling each user equipment 40 to media distribution facility 36. For example, if media distribution facility 36 is a cable headend, user equipment 40 may receive information and media from media distribution facility 36 via a cable link and may transmit information to media distribution facility 36 via a dial-up modem connection or any other suitable link. Each of communications paths 42 may be unidirectional or bidirectional.

The features of the present invention are sometimes described herein in the context of an interactive media application implemented on user television equipment. This is only illustrative. An interactive media application implemented on any suitable platform (user computer equipment, user music equipment, or any other suitable platform) may be used to provide such features. In computer arrangements, on-screen options may be selected by clicking on them using a mouse pointer or other pointing arrangement. In television arrangements, on-screen options and icons may be made larger than they appear in computer-based arrangements to accommodate the greater viewing distance from which televisions are typically operated. Options may be selected by highlighting them using remote control arrow keys and by pressing an appropriate key such as an OK or enter or select key.

In a user television environment, the interactive media system may allow the user to interact with the interactive media application using user input device 56. In one suitable approach, the user may interact with the interactive media application using specific keys or selectable options on a remote control or other suitable user input device. The user may also interact with the interactive media application by navigating a highlight and selecting options displayed on the television. The interactive media application may include or be integrated with an interactive program guide. The interactive media application may access program guide information (e.g., from program guide database 32) to provide the user with program guide information, for example, in the form of an interactive program guide.

In one suitable embodiment, multiple television and audio channels (analog, digital, or both analog and digital) may be provided to user equipment 40 via communications paths 42. If desired, pause-time content may be distributed by one or more distribution facilities that are similar to, but separate, from media distribution facility 36 using communications paths that are separate from communications paths 40 (e.g., using Internet paths).

In one suitable embodiment, the interactive media application may provide the user with access to real-time media. The real-time media may, for example, be television programming, music programming or any other suitable media. The real-time media may be presented to the user on media presentation device 52. The interactive media application may provide the user with the ability to pause the real-time media. This may be done, for example, by pressing a pause button on a remote control. In response to the pause command, the interactive media application may direct the real-time media to be stored at user equipment 40 (e.g., in storage and memory 46). In another suitable approach, the interactive media application may direct the real-time media to be stored on a remote server. The remote server may be located at distribution facility 36, at a storage facility accessible via the Internet, or at any other suitable remote location. The real-time media may be stored from substantially the same point in time as the issuance of the pause command and onwards. In another suitable approach, the real-time media may begin being stored at the same point in time as the issuance of the pause command or shortly thereafter. While the real-time media is being paused, the interactive media application may present pause-time content to the user.

Upon receiving a resume command, the interactive media application may continue to play the real-time media from the point at which it was paused. The user may resume play of the real-time media by pressing a play button, by pressing the pause button a second time, or by any other suitable method. In order to play the real-time media from the point at which it was paused, the interactive media application may retrieve the real-time media from storage. The real-time media, retrieved from storage, may be played back delayed in time from the real-time media that user equipment 40 is receiving. While the delayed real-time media is being played from storage, the interactive media application may continue to store the real-time media. The interactive media application may also provide the user with the ability to fast-forward and rewind the delayed real-time media. If the delayed real-time media is fast-forwarded until there is no delay between the delayed real-time media and the real-time media, then the interactive media application may play the real-time media as it is received with user equipment 40 instead of from storage. The interactive media application may also at that point stop storing the real-time media until the media is paused again.

In another suitable approach, the interactive media application may continuously store the real-time media that the user is playing. The interactive media application may, for example, store the previous half hour or any other suitable time period of media that has been played. In this embodiment, the real-time media that is being played is always retrieved from storage. The real-time media may be played at substantially the same time at which user equipment 40 receives the real-time media. The interactive media application in this embodiment may enable the user to rewind, pause, and fast-forward the real-time media.

Media distribution facility 36 may, in one suitable approach, provide the pause-time content to user equipment 40. Pause-time content may also be distributed to user equipment 40 from Internet 60 via communications paths other than communications path 42 or from any other facility or location remote from media distribution facility 36. Pause-time content may be distributed on-demand from server 58 or continuously on a broadcast channel (e.g., on an analog channel, digital channel, vertical blanking interval, side band, or by any other suitable method). Pause-time content may also be distributed periodically or by any other suitable method to user equipment 40.

The interactive media application may substitute pause-time content that may not be related to the media currently played by the user. For example, the interactive media application may substitute pause-time content that is continuously provided to user equipment 40, for example, on a specific broadcast channel. In this approach, all users of a specific media distribution facility may be played the same pause-time content while media is paused.

The interactive media application may also substitute pause-time content that is specific to the media that is being paused or specific to each user. The pause-time content may be an advertisement associated with the media, a summary of the events that have transpired up until the point in time at which the media was paused, trivia or facts related to the media, a link to the Web site of the media, or any other suitable media or application associated with the media. The interactive media application may monitor a user's activities to provide a customized pause-time experience for that user. For example, the interactive media application may substitute specific advertisements of upcoming media events to the user based on the type of media that the user has historically played.

The interactive media application may store some or all of the pause-time content on user equipment 40. The interactive media application may update the stored pause-time content periodically, on-demand, via polling, or by any other suitable approach. Specific pause-time content may be stored and updated according to the media data. For example, if a golf related media program is available to the user, the interactive media application may store a first advertisement featuring Callaway™ irons. If the user pauses the golf related media program, then the first advertisement may be played to the user. The interactive media application may subsequently replace the first advertisement and store a second advertisement featuring Ping™ putters. This way, if the user pauses the golf related media program for a second time, the user is presented with updated pause-time content.

In order to substitute customized pause-time content, the interactive media application may monitor the content of the media data associated with the media. Media data may be data such as identifiers, URL's, interactive media application control instructions, feature access information, metadata, program guide data or any other data related to the media and pause-time content. Media data may describe the media or pause-time content presented by user equipment 40. For example, media data may include information describing the content of a program, the clothes that an actor is wearing, the equipment used by the actors, the geographic location where the program takes place, whether media (e.g., commercials) can be skipped on playback, or any other suitable media or pause-time content information. Media data for media may contain an identifier to specific pause-time content stored by the system (e.g., in media distribution facility 36). When the user pauses the currently viewed media, the interactive media application may, for example, retrieve pause-time content from media distribution facility 36 based upon an identifier contained within the media data associated with currently paused media. In another embodiment, the interactive media application may, for example, substitute advertisements linked to metadata contained within the media data.

Media data may also contain instructions or commands for the interactive media application. The media data may include instructions such as instructions to record certain portions of the media that is playing (e.g., to create a video summary), instructions to prevent the user from fast-forwarding through the media, or any other suitable instructions. For example, when the user is viewing a sporting event such as basketball, the interactive media application may be instructed by the media data associated with the sporting event to record replays (i.e., the second showing of a play just viewed) of a "great basketball play" as the replay is presented for the second time. This way, a collection of "great plays" may be compiled and stored by the interactive media application and substituted upon pause to provide a video summary highlighting the best plays of the game.

In another suitable approach, media data associated with media such as video-on-demand, near video-on-demand, or any other suitable media may instruct the interactive media application to record certain portions of the media as it is presented to the user. In this approach, the media data may, for example, instruct the interactive media application to record certain portions (e.g., important scenes of a movie) of the media. The media data associated with the media may instruct the interactive media application to record different scenes of the media each time the user views the same media. For example, the media data may instruct the interactive media application to record different themes (e.g., a compilation of action scenes, plot scenes, romance scenes, or any other suitable category of the media) of media each time the user is presented with the same media. If desired, the interactive media application may compile a summary (e.g., a shortened version of a theatrical movie trailer) specific to the media viewed by the user.

Media data may be received by the interactive media application in a variety of different ways. In one suitable approach, media data may be received in conjunction with pause-time content or media, received separately from the viewed media, or by any other suitable reception means. When the media data is received in conjunction with the pause-time content or media, it may, for example, be incorporated, hidden, or ingrained (e.g., in the vertical blanking interval or on a side band) with the media or real-time signal received by user equipment 40. In such an approach, the interactive media application may process the media signal to obtain the media data (e.g., identifier, instructions, URL, etc.).

The interactive media application may also obtain the media data associated with the played media by monitoring, for example, the channel that the user is viewing. The interactive media application using this information (e.g., channel information) and the current time, may access a database that contains the media data for the channels that are available to the user in order to obtain the desired media data. For example, when the user is viewing channel five, the interactive media application may check the database and determine that the media data associated with channel five indicates that channel five is playing a comedy. In this case, the interactive media application may substitute comedy related pause-time content if the user pauses the media.

When the interactive media application stores media (e.g., during the pausing of media, when the media has been scheduled to be recorded, etc.), the application may also store the media's associated media data. The stored media data may, for example, enable the interactive media application to provide customized pause-time content, prevent access to application features at certain times (e.g., preventing fast-forwarding of certain media), or perform any other suitable actions when the user is playing delayed real-time media, delayed near video-on-demand media, or recorded media. For example, when the user pauses previously recorded media, the interactive media application may access its associated stored media data so that the appropriate pause-time content may be substituted for the paused recorded media.

The interactive media application may provide the user with the ability to personalize pause-time content presented to the user. For example, the user may select the type of pause-time content that is presented by the interactive media application when the media is paused. The interactive media application may also provide the user with the ability to select the type of pause-time content that is presented for specific types of media. The different types of pause-time content may include trivia, summaries, interviews, broadcast video, music, promotions, advertisements, or any other suitable pause-time content. For example, if the media is "home improvement" or "build it yourself" oriented programming, the user may select promotions and advertisements as the presented pause-time content. This way, the user may be, for example, presented with different promotions on power tools, building supplies, hand tools, or any other suitable home building related promotions during pause. In another suitable approach, the user may be able to prevent certain types of pause-time content to be presented when the media is paused.

The interactive media application may provide the user with the ability to change the pause-time content being provided to the user. For example, if the user is presented with a pause-time content promotion that has been previously presented, the user may advance to the next promotion by pressing, for example, a button on a remote control. The user may also be provided with the ability to change the type of pause-time content currently being presented to a different type of pause-time content. If the user is viewing pause-time content that is an interview, the user may change the pause-time content to, for example, an advertisement or any other suitable pause-time content.

The interactive media application may also display information on user equipment 40, for example, in the form of an overlay, an interactive overlay, a program guide screen, or in any other suitable display format. The interactive media application may display information to inform the user as to the status of the interactive media application or in response to user inputs (e.g., play, pause, fast-forward, rewind, stop, etc.). These display screens may be displayed for a certain period of time and then time out or may be removed in response to a user input (e.g., by pressing a button on user input device 56). The interactive media application may also display additional information such as program guide information (e.g, title information), the current time and date, information that indicates how much time delay exists between the displayed media and the real-time media, or any other suitable information.

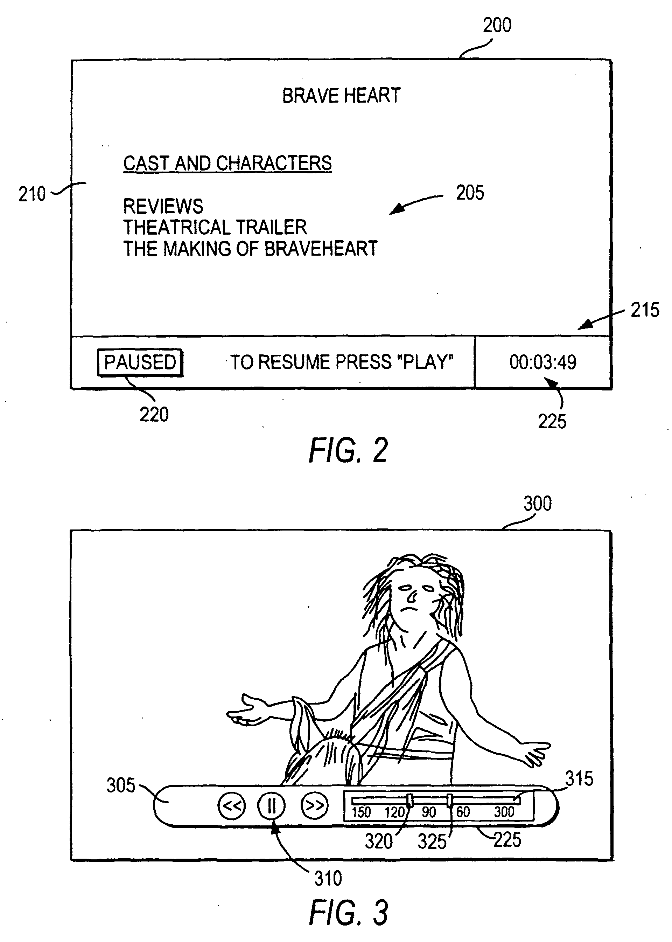

An illustrative display screen that may be displayed by the interactive media application is shown in FIG. 2. Screen 200 of FIG. 2 may be displayed when the user pauses real-time media. As illustrated, the user has paused the movie "Braveheart." The interactive media application has substituted the Web site for the movie "Braveheart" in place of the paused movie. Screen 200 may include options 205 that the user may select with indicator 210. Options 205 on the Web site may include "Cast and Characters," "Reviews," "Theatrical Trailer," "The Making of Braveheart," or any other suitable options. The user may navigate indicator 210 to a desired option by using, for example, up and down arrow keys. A user may select a desired option by pressing an "Ok" or "Enter" key or by any other suitable method. For example, if the user selects "Reviews," the interactive media application may display one or more reviews of "Braveheart."

Screen 200 may also include overlay 215. Overlay 215 may include status indicator 220 that informs the user the current status of media. Overlay 215 may also include time indicator 225. Time indicator 225 may inform the user how much time has elapsed between the point in time at which the media has been paused and the point in time in the media that is currently being received by user equipment 40. As illustrated, "Braveheart" has been paused for three minutes and forty-nine seconds.

If the user resumes play of the paused real-time media, the interactive media application may display illustrative display screen 300 as shown in FIG. 3. The interactive media application may resume playing the movie "Braveheart" from substantially the same point in time at which the movie was paused. Screen 300 may also include interactive overlay 305. Interactive overlay 305 may illustrate the different options available to the user. As illustrated, the user may be able to rewind, pause, and fast-forward the delayed media. Pause option 310 is highlighted to indicate that if the user presses, for example, the "Select" key, then the interactive media application may pause the media. The user may also be able to navigate the highlight to either the rewind or fast-forward options. In another suitable approach, the user may press designated buttons on user input device 52 to pause, fast-forward, rewind, or to perform any other suitable function. If the user presses a designated button, a highlight corresponding to the selected button may be presented on screen 300 to indicate which button was selected. Interactive overlay 305 may also include time indicator 225. As illustrated, time indicator 225 is displayed in a graphical format. Bar 315 denotes the length of the entire movie. Present position indicator 320 represents the point of the movie that is currently being displayed. Real-time indicator 325 represents the point in the real-time media that is currently being received by user equipment 40. If, for example, the user fast-forwards the media, present position indicator 320 may move closer to real-time indicator 325. If the present position indicator 320 and the real-time indicator 325 refer to the same point within the media, then the user may not be allowed to fast-forward beyond that point.

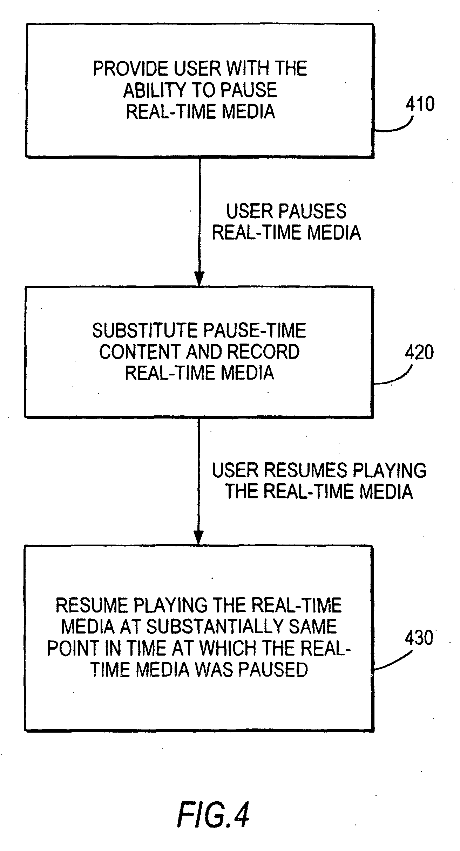

FIG. 4 is a flow chart of illustrative steps that may be involved for allowing the user to pause real-time media and playing pause-time content. The real-time media may, for example, be television programming such as broadcast programming, cable programming, and pay-per-view programming, music programming, or any other suitable type of real-time media. At step 410, the interactive media application may provide the user with the ability to pause real-time media. The real-time media may be music programming such as "The Greatest Hits of Pink Floyd." For example, the user may pause the music programming by pressing the pause button on user input device 56 or by any other suitable method.

At step 420, the interactive media application may substitute pause-time content and record the real-time media. The pause-time content may be any suitable pause-time content such as pause-time content specific to the media paused or specific to the user. The pause-time content may be any media such as graphics, text, animations, music, promotions, advertisements, summaries, trivia, Web Sites or any other suitable media or combination of media. The interactive media application may monitor the content of the media data associated with the media in order to provide the pause-time content specific to the paused media. The interactive media system may substitute pause-time content such as an audio interview with Roger Waters in place of "The Greatest Hits of Pink Floyd." This pause-time content or any other pause-time content may be substituted until the user resumes play of the real-time media.

At step 430, the interactive media application may resume playing the real-time media at substantially the same point in time at which the real-time media was paused. The interactive media application may, for example, resume play of the paused real-time media a few seconds before the pause, at the exact moment in time the media was paused, or a few seconds after the pause. The user may, for example, press the pause button again on user input device 56 or any other suitable device to resume play of the real-time media.

It will be understood that the steps shown in FIG. 4 are merely exemplary and that additional steps may be added and some of the steps may be omitted or modified. For example, the above steps may also be used for allowing a user to pause near video-on-demand media.

In another suitable approach for pausing NVOD media, the interactive media application may not record the NVOD media when the user pauses the media. Typically, NVOD media may be provided by a server (e.g., server 58) that distributes the same media program at regular intervals (e.g., every five minutes). In such an approach, the interactive media application may play a later showing of the NVOD media when the user resumes play of the media.

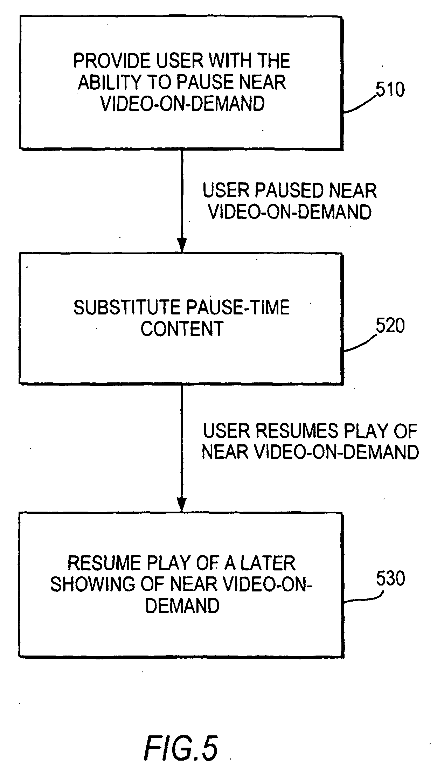

FIG. 5 is a flow chart of illustrative steps that may be involved for allowing the user to pause NVOD media and substituting pause-time content. At step 510, the user may be provided with the ability to pause the NVOD media that is currently playing.

At step 520, the interactive media application may substitute pause-time content in place of the NVOD media. The pause-time content may be any suitable pause-time content such as pause-time content specific to the media paused or specific to the user. In addition, the pause-time content may be any media such as graphics, text, animations, music, promotions, advertisements, summaries, trivia, Web Sites or any other suitable media or combination of media. The interactive media application may monitor the content of the media data associated with the NVOD media in order to provide pause-time content specific to the paused media. The pause-time content may be played until the user resumes play of the NVOD media.

At step 530, the interactive media application may resume playing the NVOD media by playing a later showing of the NVOD media. For example, if the NVOD media is distributed every five minutes and the user pauses the media for thirty minutes, then the interactive media application may resume playing the NVOD media by playing the sixth following showing of the NVOD media.

It will be understood that the steps shown in FIG. 5 are merely exemplary and that additional steps may be added and some of the steps may be omitted or modified. For example, at step 520, the interactive media application may also inform the user how much time is remaining until the next showing of the NVOD media will line up with the currently paused NVOD media.

The interactive media application may also provide the user with the ability to access video-on-demand media. The interactive media application may, for example, access VOD media in a client-server arrangement. The VOD media may be stored on a VOD server (e.g., at media distribution facility 36) that is located remote from user equipment 40. The interactive media application may use program guide information to inform the user of available VOD media. This information may be accessed by the user through an interactive program guide. When the user pauses VOD media, the interactive media application may stop playing the media from the VOD server and substitute pause-time content. When the user resumes play of the VOD media, the interactive media application may resume playing the media from the VOD server at the point in time at which it was paused.

The interactive media application may operate in a similar manner with recorded media. However, instead of accessing the media from a server located remote from user equipment 40, the interactive media application may access the recorded media locally at user equipment 40. The interactive media application may provide the user with the ability to record media by, for example, selecting programs for recording from an interactive program guide.

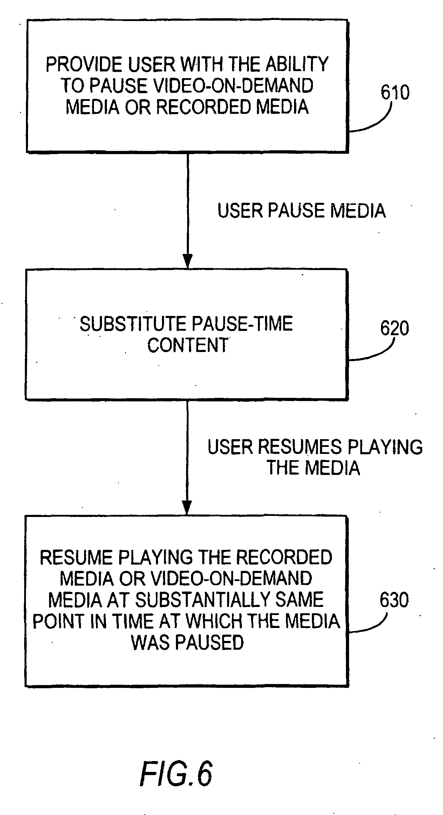

FIG. 6 is a flow chart of illustrative steps that may be involved for allowing the user to pause VOD or recorded media and substituting pause-time content. At step 610, the user may be provided with the ability to pause the VOD or recorded media that is currently playing.

At step 620, the interactive media application may substitute pause-time content in place of the paused VOD or recorded media. The interactive media application may substitute, for example, unrelated pause-time content that is continuously provided to user equipment 40 on a specific broadcast channel. The interactive media application may also monitor the content of the media data associated with the VOD or recorded media in order to substitute pause-time content that is associated with the paused media. The interactive media application may also monitor the user's actions and substitute pause-time content specific to the user. The pause-time content may be played until the user resumes play of the VOD or recorded media.

At step 630, the interactive media application may resume playing the VOD media or recorded media at substantially the same point in time at which the media was paused.

It will be understood that the steps shown in FIG. 6 are merely exemplary and that additional steps may be added and some of the steps may be omitted or modified.

In another embodiment of the present invention, the user may be prevented from accessing certain features of the interactive media application. The user may, for example, be prohibited from rewinding media, fast-forwarding media, pausing media, recording media or performing any other suitable feature of the interactive media application.

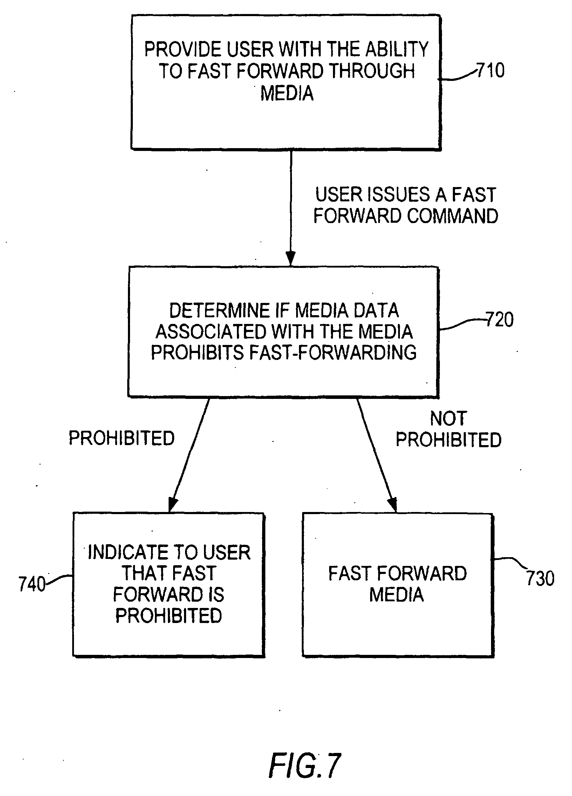

FIG. 7 is a flowchart of illustrative steps that may be involved for preventing the user from accessing a feature. At step 710, the interactive media application may provide the user with the ability to access a feature. For example, the interactive media application may provide the user with the ability to access a fast-forward feature while viewing delayed real-time media or recorded media (e.g., "The Simpsons," which may recorded on a daily basis).

At step 720, the interactive media application may determine if the media data associated with the currently viewed media prevents the user from accessing the feature. For example, media data associated with the media may prevent users from fast-forwarding through certain commercials in the media. This may provide media providers with the ability to force viewers to watch certain portions of the media (e.g., commercials) during playback.

When the media data does not prevent the user from accessing the feature, the interactive media application may allow the user to access the feature as indicated in step 730.

Alternatively, when the media data prevents the user from accessing the feature, the interactive media application may prevent the user from accessing the feature as indicated at step 740. The interactive media application may also inform the user that the feature is restricted.

It will be understood that the steps shown in FIG. 7 are merely exemplary and that additional steps may be added and some of the steps may be omitted or modified.

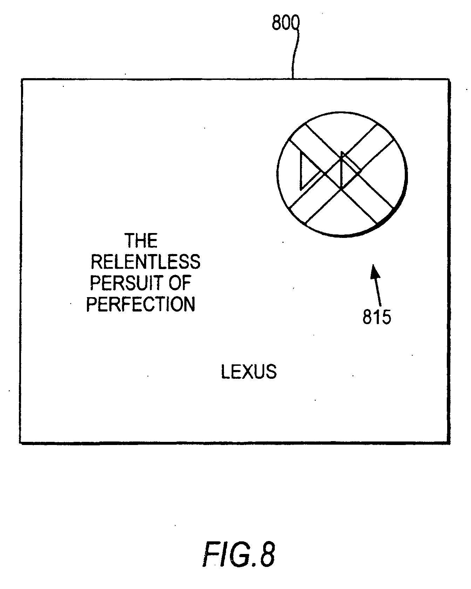

An illustrative display screen that may be displayed by the interactive media application when the user attempts to access a feature is shown in FIG. 8. Screen 800 of FIG. 8 may be displayed when the user attempts to fast-forward the media. As illustrated, the user is attempting to fast-forward through a "Lexus" commercial. Overlay 815 may be displayed to inform the user that the media may not be fast-forwarded. Overlay 815 is merely illustrative and any other suitable overlay or notification may be presented to the user to indicate that the feature is restricted.

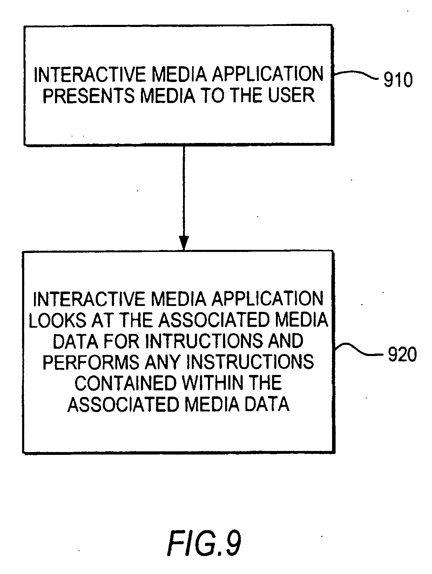

FIG. 9 is a flowchart of illustrative steps that may be involved in instructing the interactive media application to perform certain tasks based on the content of the media data. At step 910, the interactive media application may present media (e.g., real-time, VOD, NVOD) to the user. At step 920, the interactive media application may look at the media data associated with the media currently being presented for instructions and perform any instructions contained with the associated media data. For example, if the user is watching a television program, the media data may, for example, instruct the interactive media application to record the opening scene, an important shift in the plot, a replay, or any other suitable portion of the program viewed by the user.

Thus, systems and methods for presenting pause-time content are provided. One skilled in the art will realize that the present invention can be practiced by other than the described embodiments, which are presented for purposes of illustration and not of limitation, and that the present invention is limited only by the claims which follow.

## Claims

1. A method for using an interactive television application to substitute pause-time content in place of media that is paused, comprising:
playing media, wherein the media is television programming, video-ondemand programming, near video-on-demand programming or, music programming;
the media having an identifier to specific pause-time content;
pausing the media in response to a user pause command to pause play of the media;
in response to the media being paused, retrieving the pause-time content from a pause-time content database based on said identifier;
playing the retrieved pause-time content by substituting the pause-time content in place of the media while the media is paused.

2. A method according to claim 1 further comprising recording the media while the media is paused.

3. The method of claim 1 wherein the media is real-time media, for example video on demand media or near video-on-demand media, or wherein the media is previously recorded media.

4. The method of claim 1 further comprising providing the user with the ability to resume play of the paused media and preferably the ability to resume play of the media at the same or substantially the same point at which the media was paused.

5. The method of claim 1 further comprising:
providing the user with the ability to resume play of the paused media and providing the user with the ability to fast-forward the media; or
recording the media as the media is playing; and/or
providing the user with the ability to rewind the media.

6. The method of claim 1 wherein the pause-time content is associated with the media that is paused, for instance wherein the media is a television program and the pause-time content is associated with the television program or wherein the media is a music program and the pause-time content is associated with the music program.

7. The method of claim 1 wherein the media has associated media data and wherein the interactive media application uses the content of the media data to substitute pause-time content that is associated with the media.

8. The method of claim 1 wherein the pause-time content is selected from the group consisting of an advertisement, a promotion, a trivia game, a musical selection, a graphic, an animation, a program summary, a textual description, broadcast video and a web site.

9. The method of claim 1 wherein the interactive media application is implemented on user equipment, the method further comprising storing the pause-time content locally at the user equipment or storing the pause-time content remote from the user equipment, the method preferably further comprising allowing the interactive media application to access the pause-time content on demand.

10. The method of claim 1 wherein the interactive media application is implemented on a personal video recorder, the method preferably further comprising recording the media with the personal video recorder.

11. The method of claim 1 wherein the media is real-time media, the method further comprising displaying the amount of time that has lapsed between the paused media and the real-time media.

12. The method of claim 1 wherein the interactive media application is implemented on user television equipment and wherein the media is television programming that is being delivered to the user television equipment in real-time, the method further comprising displaying the amount of time that has lapsed between the paused television programming and the real-time television programming in an overlay.

13. The method of claim 1 further comprising providing the user with the ability to personalise the pause-time content or providing the user the ability to select particular types of pause-time content to be presented by the interactive media application, or providing the user the ability to prevent particular types of pause-time content to be presented by the interactive media application, providing the user the ability to change the pause-time content that is playing, the type of pause-time content preferably being selected from a group consisting of an advertisement, a promotion, a trivia game, a musical selection, a graphic, an animation, a program summary, a textual description, and a web site.

14. The method of claim 1 wherein the interactive media application is implemented on user television equipment, the method further comprising displaying an interactive overlay over the media that informs the user of options that are available.

15. The method of claim 14 wherein the options that are available to the user are selected from the group consisting of rewind, pause, play, and fast-forward.

16. The method of claim 1 wherein the media is near video-on-demand media, the method further comprising resuming play of the near video-on-demand media by playing a subsequent feed of the near video-on-demand media.

17. The method of claim 16 further comprising displaying information while the near video-on-demand media is paused that displays the time remaining until the next feed of the near video-on-demand media will line up with the point at which the near video-on-demand media was paused.

18. An interactive television system that substitutes pause-time content in place of media that is paused, comprising user equipment configured to:
play media, wherein the media is television programming, video-ondemand programming, near video-on-demand programming or, music programming
the media having an identifier to specific pause-time content;
pause the media in response to a user pause command to pause play of the media;
in response to the media being paused, retrieve the pause-time content from a pause-time database based on said identifier;
play the retrieved pause-time content by substituting the pause-time content in place of the media while the media is paused.

19. A system according to claim 18 further configured to record the media while the media is paused.

20. The system of claim 18 wherein the user equipment is further configured to receive the media, the media preferably being real-time media and more preferably being near video-on-demand media or the media being previously recorded media.

21. The system of claim 18 wherein the user equipment is further configured to provide the user with the ability to resume play of the pause media, preferably at the same or substantially the same point at which the media was paused, or wherein the user equipment is further configured to store previously recorded media.

22. The system of claim 18 wherein the user equipment is further configured to:
provide the user with the ability to resume play of the paused media; and/or
provide the user with the ability to fast-forward the media; or
record the media as the media is playing; or
provide the user with the ability to rewind the media; or
store the pause-time content.

23. The system of claim 18 wherein the pause-time content is associated with the media that is paused, for instance, wherein the media is a television program and the pause-time content is associated with the television program or wherein the media is a music program and the pause-time content is associated with the music program.

24. The system of claim 18 further comprising media data that is associated with the media, wherein the user equipment is further configured to use the content of the media data to substitute pause-time content that is associated with the media, the user equipment preferably being configured to receive the media data along with the media.

25. The system of claim 18 or 24 wherein the pause-time content is selected from the group consisting of an advertisement, a promotion, a trivia game, a musical selection, a graphic, an animation, a program summary, a textual description, broadcast video and a web site.

26. The system of claim 18 further comprising a remote facility to store the media and/or pause-time content, wherein the user equipment is further configured to play the media or the pause-time content by accessing the media or pause-time content on-demand from the remote facility, the remote facility preferably being a media distribution facility.

27. The system of claim 18 wherein the user equipment is user music equipment or user television equipment or a personal video recorder.

28. The system of claim 18 wherein the user equipment is further configured to:
receive the media in real-time;
play the media in real-time; and
display the amount of time that has lapsed between the paused media and the media that is being received in real-time.

29. The system of claim 18 wherein the user equipment is user television equipment and wherein the user television equipment is further configured to display the amount of time that has lapsed between the paused media and the media that is being received in real-time in an overlay.

30. The system of claim 18 wherein the user equipment is further configured to provide the user with the ability to personalise the pause-time content, or wherein the user equipment is further configured to provide the user the ability to select particular types of pause-time content to be presented by the user equipment, the type of pause-time content preferably being selected from a group consisting of an advertisement, a promotion, a trivia game, a musical selection, a graphic, an animation, a program summary, a textual description, and a web site.

31. The system of claim 18 wherein the user equipment is further configured to provide the user the ability to prevent particular types of pause-time content to be presented by the user equipment, or to provide the user the ability to change the pause-time content that is playing.

32. The system of claim 18 wherein the user equipment is further configured to provide the user with the ability to rewind and fast-forward the media.

33. The system of claim 18 further comprising media data that is associated with the media, wherein the user equipment is further configured to use the content of the media data to substitute the pause-time content that is associated with the media.

34. The system of claim 18 wherein the user equipment is user television equipment and wherein the user television equipment is further configured to display an interactive overlay over the media that informs the user of options that are available.

35. The system of claim 34 wherein the options that are available to the user are selected from the group consisting of rewind, pause, play, and fast-forward.

36. The system of claim 18 wherein the media is near video-on-demand media and wherein the user equipment is further configured to resume play of the near video-on-demand media by playing a subsequent feed of the near video-on-demand media.

37. The system of claim 36 wherein the user equipment is further configured to display information while the near video-on-demand media is paused that displays the time remaining until the next feed of the near video-on-demand media will line up with the point at which the near video-on-demand media was paused.

## Patentansprüche

1. Ein Verfahren zum Verwenden einer interaktiven Fernsehanwendung zum Ersetzen eines Mediums, das pausiert wird, durch Pausenzeitinhalt, aufweisend:
Abspielen des Mediums, wobei das Medium ein Fernsehprogramm, ein Video-On-Demand-Programm, ein Near-Video-On-Demand-Programm oder ein Musikprogramm ist;
wobei das Medium einen Identifizierer zu einem speziellen Pausenzeitinhalt umfaßt;
Pausieren des Mediums als Antwort auf einen Pausen-Befehl eines Benutzers zum Pausieren des Abspielens des Mediums;
Abrufen des Pausenzeitinhaltes aus einer Pauseninhalt-Datenbank auf der Grundlage des Identifizierers als Antwort auf ein Pausieren des Mediums;
Abspielen des abgerufenen Pausenzeitinhaltes durch Ersetzen des Mediums durch den Pausenzeitinhalts, während das Medium pausiert wird.

2. Ein Verfahrens nach Anspruch 1, ferner aufweisend ein Aufnehmen des Mediums, während das Medium pausiert wird.

3. Das Verfahren nach Anspruch 1, wobei das Medium ein Echtzeit-Medium ist, beispielsweise ein Video-On-Demand-Medium oder Near-Video-On-Demand-Medium oder wobei das Medium ein zuvor aufgenommenes Medium ist.

4. Das Verfahren nach Anspruch 1, ferner aufweisend ein Bereitstellen der Fähigkeit zum Wiederaufnehmen des Abspielens des pausierten Mediums für den Benutzer, und vorzugsweise die Fähigkeit zum Wiederaufnehmen des Abspielens des Mediums an der gleichen oder im wesentlichen der gleichen Stelle, an welcher das Medium pausiert wurde.

5. Das Verfahren nach Anspruch 1, ferner aufweisend:
ein Bereitstellen der Fähigkeit zum Wiederaufnehmen des Abspielens des pausierten Mediums für den Benutzer und ein Bereitstellen der Fähigkeit zum schnellen Vorspielen des Mediums für den Benutzer; oder
ein Aufnehmen des Mediums, während das Medium abgespielt wird; und/oder
ein Bereitstellen der Fähigkeit zum Rückspulen des Mediums für den Benutzer.

6. Das Verfahren nach Anspruch 1, wobei der Pausenzeitinhalt mit dem Medium verknüpft wird, das pausiert wird, wobei das Medium beispielsweise ein Fernsehprogramm ist und der Pausenzeitinhalt mit dem Fernsehprogramm verknüpft ist, oder wobei das Medium ein Musikprogramm ist und der Pausenzeitinhalt mit dem Musikprogramm verknüpft ist.

7. Das Verfahren nach Anspruch 1, wobei das Medium zugehörige Mediumdaten aufweist und wobei die interaktive Mediumanwendung den Inhalt der Mediumdaten zum Ersetzen durch den mit dem Medium verknüpften Pausenzeitinhalt verwendet.

8. Das Verfahren nach Anspruch 1, wobei der Pausenzeitinhalt aus der Gruppe bestehend aus einer Anzeige, einer Werbung, einem Ratespiel, einer Musikauswahl, einer Grafik, einer Animation, einer Programmzusammenfassung, einer Textbeschreibung, einem Fernsehvideo und einer Web-Seite ausgewählt wird.

9. Das Verfahren nach Anspruch 1, wobei die interaktive Mediumanwendung auf einer Benutzereinrichtung implementiert wird, wobei das Verfahren ferner ein lokales Speichern des Pausenzeitinhaltes auf der Benutzereinrichtung oder ein Speichern des Pausenzeitinhaltes entfernt von der Benutzereinrichtung aufweist, und wobei das Verfahren vorzugsweise ferner ermöglicht, daß die interaktive Mediumanwendung auf Anforderung auf den Pausenzeitinhalt zugreifen kann.

10. Das Verfahren nach Anspruch 1, wobei die interaktive Mediumanwendung auf einem Personal-Videorecorder implementiert wird, wobei das Verfahren vorzugsweise ferner ein Aufnehmen des Mediums mit dem Personal-Videorecorder aufweist.

11. Das Verfahren nach Anspruch 1, wobei das Medium ein Echtzeit-Medium ist, und wobei das Verfahren ferner ein Anzeigen des Zeitintervalls aufweist, das zwischen dem pausierten Medium und dem Echtzeit-Medium verstrichen ist.

12. Das Verfahren nach Anspruch 1, wobei die interaktive Mediumanwendung auf einer Benutzer-Fernseheinrichtung implementiert wird und wobei das Medium ein Fernsehprogramm ist, das der Benutzer-Fernseheinrichtung in Echtzeit geliefert wird, wobei das Verfahren ferner ein Anzeigen des Zeitintervalls aufweist, der zwischen dem pausierten Fernsehprogramm und dem Echtzeit-Fernsehprogramm verstrichen ist, in einem Overlay.

13. Das Verfahren nach Anspruch 1, ferner aufweisend, daß dem Benutzer die Fähigkeit zum Personalisieren des Pausenzeitinhaltes bereitgestellt wird oder dem Benutzer die Fähigkeit zum Auswählen bestimmter Arten von durch die interaktive Mediumanwendung dargestellten Pauseninhalten bereitgestellt wird, oder dem Benutzer die Fähigkeit zum Verhindern bestimmter Arten von durch die interaktive Mediumanwendung darzustellenden Pauseninhalten bereitgestellt wird, oder daß dem Nutzer die Fähigkeit zum Ändern des Pauseninhaltes bereitgestellt wird, der abgespielt wird, wobei die Art des Pausenzeitinhaltes vorzugsweise ausgewählt wird aus der Gruppe, bestehend aus einer Anzeige, einer Werbung, einem Ratespiel, einer Musikauswahl, einer Graphik, einer Animation, einer Programmzusammenfassung, einer Textbeschreibung und einer Web-Seite.

14. Das Verfahren nach Anspruch 1, wobei die interaktive Mediumanwendung auf einer Benutzer-Fernseheinrichtung implementiert wird, wobei das Verfahren ferner ein Anzeigen eines interaktiven Overlays, das den Benutzer über verfügbare Optionen informiert, über dem Medium aufweist.

15. Das Verfahren nach Anspruch 14, wobei die dem Benutzer verfügbaren Optionen aus der Gruppe, bestehend aus Zurückspulen, Pause, Abspielen und schneller Vorlauf ausgewählt werden.

16. Das Verfahren nach Anspruch 1, wobei das Medium ein Near-Video-On-Demand-Medium ist, wobei das Verfahren ferner ein Wiederaufnehmen des Abspielens des Near-Video-On-Demand-Mediums durch Abspielen einer nachfolgenden Einspielung des Near-Video-On-Demand-Mediums aufweist.

17. Das Verfahren nach Anspruch 16, ferner aufweisend, ein Anzeigen von Informationen, während das Near-Video-On-Demand-Medium pausiert wird, wobei die Informationen die Zeit anzeigen, die verbleibt, bis die nächste Einspielung des Near-Video-On-Demand-Mediums mit dem Punkt abgeglichen ist, an welchem das Near-Video-On-Demand-Medium pausiert wurde.

18. Ein interaktives Fernsehsystem, das ein Medium, das pausiert wird, durch Pausenzeitinhalt ersetzt, aufweisend eine Benutzereinrichtung, die ausgebildet ist zum:
Abspielen eines Mediums, wobei das Medium ein Fernsehprogramm, ein Video-On-Demand-Programm, ein Near-Video-On-Demand-Programm oder ein Musikprogramm ist, wobei das Medium einen Identifizierer zu einem speziellen Pausenzeitinhalt aufweist;
Pausieren des Mediums als Antwort auf einen Pause-Befehl eines Benutzers zum Pausieren des Abspielens des Mediums;
Abrufen des Pausenzeitinhaltes von einer Pausenzeitdatenbank auf der Grundlage des Identifizierers als Antwort auf das Medium, welches pausiert wird;
Abspielen des abgerufenen Pausenzeitinhaltes durch Ersetzen des Mediums durch den Pausenzeitinhalt, während das Medium pausiert wird.

19. Ein System nach Anspruch 18, ferner ausgebildet zum Aufnehmen des Mediums, während das Medium pausiert wird.

20. Das System nach Anspruch 18, wobei die Benutzereinrichtung ferner zum Empfangen des Mediums ausgebildet ist, wobei das Medium vorzugsweise ein Echtzeit-Medium und insbesondere ein Near-Video-On-Demand-Medium ist, oder das Medium ein zuvor aufgenommenes Medium ist.

21. Das System nach Anspruch 18, wobei die Benutzereinrichtung ferner zum Bereitstellen der Fähigkeit zum Wiederaufnehmen des Abspielens des pausierten Mediums für den Benutzer ausgebildet ist, vorzugsweise an der gleichen oder im wesentlichen der gleichen Stelle, an welcher das Medium pausiert wurde, oder wobei die Benutzereinrichtung ferner zum Speichern eines zuvor aufgenommenen Mediums ausgebildet ist.

22. Das System nach Anspruch 18, wobei die Benutzereinrichtung ferner ausgebildet ist:
zum Bereitstellen der Fähigkeit zum Wiederaufnehmen des Abspielens des pausierten Mediums für den Benutzer; und/oder
zum Bereitstellen der Fähigkeit zum schnellen Vorspielen des Mediums für den Benutzer; oder
zum Aufnehmen des Mediums, während das Medium abgespielt wird; oder
zum Bereitstellen der Fähigkeit zum Rückspulen des Mediums; oder
zum Speichern des Pausenzeitinhalts.

23. Das System nach Anspruch 18, wobei der Pausenzeitinhalt mit dem Medium verknüpft ist, das pausiert wird, wobei das Medium beispielsweise ein Fernsehprogramm ist und der Pausenzeitinhalt mit dem Fernsehprogramm verknüpft ist, oder wobei das Medium ein Musikprogramm ist und der Pausenzeitinhalt mit dem Musikprogramm verknüpft ist.

24. Das System nach Anspruch 18, ferner mit Mediendaten, die mit dem Medium verknüpft sind, wobei die Benutzereinrichtung ferner ausgebildet ist, um den Inhalt der Mediendaten zum Ersetzen durch den mit dem Medium verknüpften Pausenzeitinhalt zu verwenden, wobei die Benutzereinrichtung vorzugsweise ausgebildet ist, um die Mediumdaten zusammen mit dem Medium zu empfangen.

25. Das System nach Anspruch 18 oder 24, wobei der Pausenzeitinhalt aus der Gruppe bestehend aus einer Anzeige, einer Werbung, einem Ratespiel, einer Musikauswahl, einer Graphik, einer Animation, einer Programmzusammenfassung, einer Textbeschreibung, einem Fernsehvideo und einer Web-Seite ausgewählt ist.

26. Das System nach Anspruch 18, ferner mit einer fernen Einrichtung zum Speichern des Mediums und/oder des Pausenzeitinhalts, wobei die Benutzereinrichtung konfiguriert ist, um das Medium oder den Pausenzeitinhalt **dadurch** abzuspielen, daß auf Anforderung auf das Medium oder den Pausenzeitinhalt von der entfernten Einrichtung zugegriffen wird, wobei die entfernte Einrichtung vorzugsweise eine Mediumverteileinrichtung ist.

27. Das System nach Anspruch 18, wobei die Benutzereinrichtung eine Benutzermusikeinrichtung oder eine Benutzerfernseheinrichtung oder ein Personal-Videorekorder ist.

28. Das System nach Anspruch 18, wobei die Benutzereinrichtung ausgebildet ist zum
Empfangen des Mediums in Echtzeit;
Abspielen des Mediums in Echtzeit; und
Anzeigen der Zeit, die zwischen dem pausierten Medium und dem in Echtzeit empfangenen Medium verstrichen ist.

29. Das System nach Anspruch 18, wobei die Benutzereinrichtung eine Benutzerfernseheinrichtung ist, und wobei die Benutzerfernseheinrichtung ferner ausgebildet ist, um in einem Overlay die Zeit anzuzeigen, die zwischen dem pausierten Medium und dem in Echtzeit empfangenen Medium verstrichen ist.

30. Das System nach Anspruch 18, wobei die Benutzereinrichtung ferner ausgebildet ist, um für den Benutzer die Fähigkeit zum Personalisieren des Pausenzeitinhalts zur Verfügung zu stellen, oder wobei die Benutzereinrichtung ausgebildet ist, um für den Benutzer die Fähigkeit bereitzustellen, bestimmte Arten von durch die Benutzereinrichtung darzustellenden Pausenzeitinhalten auszuwählen, wobei die Art des Pausenzeitinhaltes vorzugsweise ausgewählt wird aus einer Gruppe, bestehend aus einer Anzeige, einer Werbung, einem Ratespiel, einer Musikauswahl, einer Graphik, einer Animation, einer Programmzusammenfassung, einer Textbeschreibung und einer Web-Seite.

31. Das System nach Anspruch 18, wobei die Benutzereinrichtung ferner ausgebildet ist, um dem Benutzer die Fähigkeit bereitzustellen, bestimmte Arten von durch die Benutzereinrichtung darzustellenden Pausenzeitinhalten zu verhindern, oder um dem Benutzer die Fähigkeit bereitzustellen, den Pausenzeitinhalt zu verändern, der abgespielt wird.

32. Das System nach Anspruch 18, wobei die Benutzereinrichtung ferner ausgebildet ist, um dem Benutzer die Fähigkeit bereitzustellen, das Medium zurückzuspulen und vorzuspulen.

33. Das System nach Anspruch 18, ferner mit Mediendaten, die dem Medium zugeordnet sind, wobei die Benutzereinrichtung ferner ausgebildet ist, um den Inhalt der Mediendaten zum Ersetzen durch den mit dem Medium verknüpften Pausenzeitinhalt zu verwenden.

34. Das System nach Anspruch 18, wobei die Benutzereinrichtung eine Benutzerfernseheinrichtung ist, und wobei die Benutzerfernseheinrichtung ferner ausgebildet ist, um über dem Medium ein interaktives Overlay anzuzeigen, das den Benutzer über verfügbare Optionen informiert.

35. Das System nach Anspruch 34, wobei die dem Benutzer verfügbaren Optionen aus der Gruppe, bestehend aus Zurückspulen, Pause, Abspielen und schneller Vorlauf, ausgewählt werden.

36. Das System nach Anspruch 18, wobei das Medium ein Near-Video-On-Demand-Medium ist, und wobei die Benutzereinrichtung ausgebildet ist, um das Abspielen des Near-Video-On-Demand-Mediums wieder aufzunehmen, indem eine nachfolgende Einspielung des Near-Video-On-Demand-Mediums abgespielt wird.

37. Das System nach Anspruch 36, wobei die Benutzereinrichtung ferner ausgebildet ist, um beim Pausieren des Near-Video-On-Demand-Mediums Informationen anzuzeigen, die die verbleibende Zeit anzeigen, bis die nächste Einspielung des Near-Video-On-Demand-Mediums mit dem Punkt abgeglichen ist, an welchem das Near-Video-On-Demand-Medium pausiert wurde.

## Revendications

1. Procédé permettant d'utiliser une application télévisuelle interactive pour remplacer du contenu multimédia qui est momentanément arrêté par du contenu d'arrêt momentané, comprenant les étapes suivantes :
la lecture du contenu multimédia, dans lequel le contenu multimédia est un programme de télévision, un programme de vidéo à la demande, un programme de quasi-vidéo à la demande ou un programme musical ; le contenu multimédia comportant un identificateur d'un contenu spécifique d'arrêt momentané;
l'arrêt momentané du contenu multimédia en réponse à une commande d'arrêt momentané de l'utilisateur pour arrêter momentanément la lecture du contenu multimédia ;
en réponse à l'arrêt momentané du contenu multimédia, l'extraction du contenu d'arrêt momentané d'une base de données de contenu d'arrêt momentané, sur la base dudit identificateur ;
la lecture du contenu d'arrêt momentané extrait en remplaçant le contenu multimédia par du contenu d'arrêt momentané pendant que le contenu multimédia est arrêté momentanément.

2. Procédé suivant la revendication 1 comprenant en outre l'enregistrement du contenu multimédia pendant que le contenu multimédia est arrêté momentanément.

3. Procédé suivant la revendication 1 dans lequel le contenu multimédia est du contenu multimédia en temps réel, par exemple du contenu multimédia de vidéo à la demande ou du contenu multimédia de quasi-vidéo à la demande, ou dans lequel le contenu multimédia est du contenu multimédia enregistré précédemment.

4. Procédé suivant la revendication 1 comprenant en outre la possibilité pour l'utilisateur de reprendre la lecture du contenu multimédia arrêté momentanément et de préférence la possibilité de reprendre la lecture du contenu multimédia au même point ou pratiquement au même point que celui auquel le contenu multimédia a été arrêté momentanément.

5. Procédé suivant la revendication 1, comprenant en outre les étapes suivantes :
la possibilité pour l'utilisateur de reprendre la lecture du contenu multimédia arrêté momentanément et la possibilité pour l'utilisateur d'avancer rapidement à travers le contenu multimédia ; ou
l'enregistrement du contenu multimédia tandis que le contenu multimédia est lu, et/ou
la possibilité pour l'utilisateur de revenir en arrière à travers le contenu multimédia.

6. Procédé suivant la revendication 1 dans lequel le contenu d'arrêt momentané est associé au contenu multimédia qui est arrêté momentanément, par exemple dans lequel le contenu multimédia est un programme de télévision et le contenu d'arrêt momentané est associé au programme de télévision ou dans lequel le contenu multimédia est un programme de musique et le contenu d'arrêt momentané est associé au programme de musique.

7. Procédé suivant la revendication 1 dans lequel le contenu multimédia comprend des données de contenu multimédia associées et dans lequel l'application à contenu multimédia interactif utilise le contenu des données de contenu multimédia pour remplacer le contenu multimédia par du contenu d'arrêt momentané qui est associé au contenu multimédia.

8. Procédé suivant la revendication 1 dans lequel le contenu d'arrêt momentané est choisi parmi le groupe comprenant une publicité, une promotion, un jeu questionnaire général, une sélection musicale, un élément graphique, une animation, un résumé de programme, une description textuelle, de la vidéo diffusée et un site Web.

9. Procédé suivant la revendication 1 dans lequel l'application à contenu multimédia interactif est mise en oeuvre sur un équipement personnel, le procédé comprenant en outre la mémorisation du contenu d'arrêt momentané localement dans l'équipement personnel ou la mémorisation du contenu d'arrêt momentané à distance de l'équipement personnel, le procédé comprenant en outre de préférence la possibilité pour l'application à contenu multimédia interactif d'accéder à la demande au contenu d'arrêt momentané.

10. Procédé suivant la revendication 1 dans lequel l'application à contenu multimédia interactif est mise en oeuvre sur un enregistreur vidéo personnel, le procédé comprenant en outre de préférence l'enregistrement du contenu multimédia à l'aide de l'enregistreur vidéo personnel.

11. Procédé suivant la revendication 1 dans lequel le contenu multimédia est du contenu multimédia en temps réel, le procédé comprenant en outre l'affichage du laps de temps qui s'est écoulé entre le contenu multimédia arrêté momentanément et le contenu multimédia en temps réel.

12. Procédé suivant la revendication 1 dans lequel l'application à contenu multimédia interactif est mise en oeuvre sur un équipement de télévision personnel et dans lequel le contenu multimédia est un programme de télévision qui est fourni à l'équipement de télévision personnel en temps réel, le procédé comprenant en outre l'affichage en superposition du laps de temps qui s'est écoulé entre le programme de télévision arrêté momentanément et le programme de télévision en temps réel.

13. Procédé suivant la revendication 1 comprenant en outre la possibilité pour l'utilisateur de personnaliser le contenu d'arrêt momentané ou la possibilité pour l'utilisateur de sélectionner des types particuliers de contenu d'arrêt momentané à présenter par l'application à contenu multimédia interactif, ou la possibilité pour l'utilisateur d'empêcher que des types particuliers de contenu d'arrêt momentané soient présentés par l'application à contenu multimédia interactif, la possibilité pour l'utilisateur de modifier le contenu d'arrêt momentané qui est lu, le type de contenu d'arrêt momentané étant de préférence choisi parmi un groupe comprenant une publicité, une promotion, un jeu questionnaire général, une sélection musicale, un élément graphique, une animation, un résumé de programme, une description textuelle et un site Web.

14. Procédé suivant la revendication 1 dans lequel l'application à contenu multimédia interactif est mise en oeuvre sur un équipement de télévision personnel, le procédé comprenant en outre l'affichage d'une superposition interactive au-dessus du contenu multimédia qui informe l'utilisateur des options qui sont disponibles.

15. Procédé suivant la revendication 14 dans lequel les options qui s'offrent à l'utilisateur sont choisies parmi le groupe comprenant le retour en arrière, l'arrêt momentané, la lecture et l'avance rapide.

16. Procédé suivant la revendication 1 dans lequel le contenu multimédia est du contenu multimédia de quasi-vidéo à la demande, le procédé comprenant en outre la reprise de la lecture du contenu multimédia de quasi-vidéo à la demande en lisant une entrée ultérieure du contenu multimédia de quasi-vidéo à la demande.

17. Procédé suivant la revendication 16 comprenant en outre l'affichage d'informations pendant que le contenu multimédia de quasi-vidéo à la demande est arrêté momentanément qui affichent le temps restant avant que l'entrée suivante de contenu multimédia de quasi-vidéo à la demande corresponde au point auquel le contenu multimédia de quasi-vidéo à la demande a été arrêté momentanément.

18. Système de contenu multimédia interactif qui remplace le contenu multimédia qui est arrêté momentanément par du contenu lu pendant l'arrêt momentané, comprenant un équipement personnel configuré pour :
lire du contenu multimédia, dans lequel le contenu multimédia est un programme de télévision, un programme de vidéo à la demande, un programme de quasi-vidéo à la demande ou un programme musical ; le contenu multimédia comportant un identificateur de contenu d'arrêt momentané spécifique ;
arrêter momentanément le contenu multimédia en réponse à une commande d'arrêt momentané de l'utilisateur pour arrêter momentanément la lecture du contenu multimédia ;
en réponse à l'arrêt momentané du contenu multimédia, extraire le contenu d'arrêt momentané d'une base de données de contenu d'arrêt momentané, sur la base dudit identificateur ;
lire le contenu d'arrêt momentané extrait en remplaçant le contenu multimédia par du contenu d'arrêt momentané pendant que le contenu multimédia est arrêté momentanément.

19. Système suivant la revendication 18 configuré en outre pour enregistrer le contenu multimédia pendant que le contenu multimédia est arrêté momentanément.

20. Système suivant la revendication 18 dans lequel l'équipement personnel est en outre configuré pour recevoir le contenu multimédia, le contenu multimédia étant de préférence du contenu multimédia en temps réel et étant de manière plus préférée du contenu multimédia de quasi-vidéo à la demande, ou le contenu multimédia étant du contenu multimédia enregistré précédemment.

21. Système suivant la revendication 18 dans lequel l'équipement personnel est en outre configuré pour offrir à l'utilisateur la possibilité de reprendre la lecture du contenu multimédia arrêté momentanément, de préférence au même point ou pratiquement au même point que celui auquel le contenu multimédia a été arrêté momentanément, ou dans lequel l'équipement personnel est en outre configuré pour mémoriser du contenu multimédia enregistré précédemment.

22. Système suivant la revendication 18 dans lequel l'équipement personnel est en outre configuré pour :
offrir à l'utilisateur la possibilité de reprendre la lecture du contenu multimédia arrêté momentanément, et/ou
offrir à l'utilisateur la possibilité d'avancer rapidement à travers le contenu multimédia ; ou
enregistrer le contenu multimédia tandis que le contenu multimédia est lu ; ou
offrir à l'utilisateur la possibilité de revenir en arrière à travers le contenu multimédia ; ou
mémoriser le contenu d'arrêt momentané.

23. Système suivant la revendication 18 dans lequel le contenu d'arrêt momentané est associé au contenu multimédia qui est arrêté momentanément, par exemple dans lequel le contenu multimédia est un programme de télévision et le contenu d'arrêt momentané est associé au programme de télévision ou dans lequel le contenu multimédia est un programme de musique et le contenu d'arrêt momentané est associé au programme de musique.

24. Système suivant la revendication 18 comprenant en outre des données de contenu multimédia qui sont associées au contenu multimédia, dans lequel l'équipement personnel est en outre configuré pour utiliser le contenu des données de contenu multimédia pour remplacer le contenu multimédia par du contenu d'arrêt momentané qui est associé au contenu multimédia, l'équipement personnel étant de préférence configuré pour recevoir les données de contenu multimédia en même temps que le contenu multimédia.

25. Système suivant la revendication 18 ou 24 dans lequel le contenu d'arrêt momentané est choisi parmi le groupe comprenant une publicité, une promotion, un jeu questionnaire général, une sélection musicale, un élément graphique, une animation, un résumé de programme, une description textuelle, de la vidéo diffusée et un site Web.

26. Système suivant la revendication 18 comprenant en outre une unité distante pour mémoriser le contenu multimédia et/ou le contenu d'arrêt momentané, dans lequel l'équipement personnel est en outre configuré pour extraire à la demande le contenu multimédia ou le contenu d'arrêt momentané en accédant au contenu multimédia ou au contenu d'arrêt momentané depuis l'unité distante, l'unité distante étant de préférence une unité de distribution de contenu multimédia.

27. Système suivant la revendication 18 dans lequel l'équipement personnel est un équipement musical personnel ou un équipement de télévision personnel ou un enregistreur vidéo personnel.

28. Système suivant la revendication 18 dans lequel l'équipement personnel est en outre configuré pour :
recevoir en temps réel le contenu multimédia ;
lire en temps réel le contenu multimédia, et
afficher le laps de temps qui s'est écoulé entre le contenu multimédia arrêté momentanément et le contenu multimédia qui est reçu en temps réel.

29. Système suivant la revendication 18 dans lequel l'équipement personnel est un équipement de télévision personnel et dans lequel l'équipement de télévision personnel est en outre configuré pour afficher en superposition le laps de temps qui s'est écoulé entre le contenu multimédia arrêté momentanément et le contenu multimédia qui est reçu en temps réel.

30. Système suivant la revendication 18 dans lequel l'équipement personnel est en outre configuré pour offrir à l'utilisateur la possibilité de personnaliser le contenu d'arrêt momentané, ou dans lequel l'équipement personnel est en outre configuré pour offrir à l'utilisateur la possibilité de sélectionner des types particuliers de contenu d'arrêt momentané à présenter par l'équipement personnel, le type de contenu d'arrêt momentané étant de préférence choisi parmi un groupe comprenant une publicité, une promotion, un jeu questionnaire général, une sélection musicale, un élément graphique, une animation, un résumé de programme, une description textuelle et un site Web

31. Système suivant la revendication 18 dans lequel l'équipement personnel est en outre configuré pour offrir à l'utilisateur la possibilité d'empêcher que des types particuliers de contenu d'arrêt momentané soient présentés par l'équipement personnel, ou pour offrir à l'utilisateur la possibilité de changer le contenu d'arrêt momentané qui est lu.

32. Système suivant la revendication 18 dans lequel l'équipement personnel est en outre configuré pour offrir à l'utilisateur la possibilité de revenir en arrière et d'avancer rapidement à travers le contenu multimédia.

33. Système suivant la revendication 18 comprenant en outre des données de contenu multimédia qui sont associées au contenu multimédia, dans lequel l'équipement personnel est en outre configuré pour utiliser le contenu des données de contenu multimédia pour remplacer le contenu multimédia par du contenu d'arrêt momentané qui est associé au contenu multimédia.

34. Système suivant la revendication 18 dans lequel l'équipement personnel est un équipement de télévision personnel et dans lequel l'équipement de télévision personnel est en outre configuré pour afficher une superposition interactive au-dessus du contenu multimédia qui informe l'utilisateur des options qui sont disponibles.

35. Système suivant la revendication 34 dans lequel les options qui s'offrent à l'utilisateur sont choisies parmi le groupe comprenant le retour en arrière, l'arrêt momentané, la lecture et l'avance rapide.

36. Système suivant la revendication 18 dans lequel le contenu multimédia est du contenu multimédia de quasi-vidéo à la demande et dans lequel l'équipement personnel est en outre configuré pour reprendre la lecture du contenu multimédia de quasi-vidéo à la demande en lisant une entrée ultérieure du contenu multimédia de quasi-vidéo à la demande.

37. Système suivant la revendication 36 dans lequel l'équipement personnel est en outre configuré pour afficher des informations pendant que le contenu multimédia de quasi-vidéo à la demande est arrêté momentanément qui affichent le temps restant avant que l'entrée suivante de contenu multimédia de quasi-vidéo à la demande corresponde au point auquel le contenu multimédia de quasi-vidéo à la demande a été arrêté momentanément.
